(19) Europäisches Patentamt
European Patent Office
Office européen des brevets

(11) **EP 4 621 102 A1**

(12) **EUROPEAN PATENT APPLICATION**
published in accordance with Art. 153(4) EPC

(43) Date of publication:
**24.09.2025 Bulletin 2025/39**

(21) Application number: **23891455.0**

(22) Date of filing: **09.11.2023**

(51) International Patent Classification (IPC):
*C25B 1/21* (2006.01)      *H01M 4/50* (2010.01)

(52) Cooperative Patent Classification (CPC):
**C25B 1/21; H01M 4/06; H01M 4/50;** Y02E 60/10

(86) International application number:
**PCT/JP2023/040431**

(87) International publication number:
**WO 2024/106304 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.11.2022 JP 2022184032**

(71) Applicant: **Tosoh Corporation
Yamaguchi 746-8501 (JP)**

(72) Inventor: **FUKADA Yuko
Shunan-shi Yamaguchi 746-8501 (JP)**

(74) Representative: **TBK
Bavariaring 4-6
80336 München (DE)**

(54) **ELECTROLYTIC MANGANESE DIOXIDE, METHOD FOR PRODUCING SAME, AND USE THEREOF**

(57)    To provide an electrolytic manganese dioxide with good high-load discharge characteristics and high capacity when used as a positive-electrode material of an alkaline manganese battery and to provide a method for producing the electrolytic manganese dioxide.

An electrolytic manganese dioxide with an alkaline potential of 290 mV or more and less than 350 mV, a manganese content of 60.3% by mass or more and 63.0% by mass or less in a dry state, a structural water content of 2.60% by mass or more as defined by mass loss at 110°C to 240°C and a total structural water content of 4.10% by mass or more, and a method for producing the electrolytic manganese dioxide.

FIG. 1

EP 4 621 102 A1

## Description

TECHNICAL FIELD

The present disclosure relates to an electrolytic manganese dioxide, a method for producing the electrolytic manganese dioxide and the use of the electrolytic manganese dioxide. More specifically, the present invention relates to an electrolytic manganese dioxide used as a positive-electrode active material, for example, in a manganese battery, particularly in an alkaline manganese battery, and a method for producing the electrolytic manganese dioxide.

BACKGROUND ART

Manganese dioxide is known, for example, as a positive-electrode active material of a manganese battery, particularly as an alkaline manganese battery, and has advantages of high storage stability and low cost. In particular, an alkaline manganese battery using electrolytic manganese dioxide as a positive-electrode active material has good discharge characteristics under a wide range of loads and is therefore widely used in electronic cameras, portable information devices and even game machines and toys, and further improvement in performance is desired.

To improve the high-load characteristics of alkaline manganese batteries, proposed are an electrolytic manganese dioxide characterized in that the half-width of the (110) plane measured by XRD using CuK$\alpha$ radiation as a light source is 1.8 degrees or more and less than 2.2 degrees, the peak intensity ratio of the X-ray diffraction peak (110)/(021) is 0.70 or more and 1.00 or less, and the JIS-pH (JIS K 1467 5.9: pH value) is 1.5 or more and less than 5.0 (Patent Document 1), an electrolytic manganese dioxide with a high electric potential (hereinafter referred to as alkaline potential) measured using a mercury/mercury oxide reference electrode as a reference in 40% by weight aqueous KOH (Patent Documents 2 to 4), an electrolytic manganese dioxide having mesopores with an average size of 6.5 nm or more and 10 nm or less (Patent Document 5) and an electrolytic manganese dioxide with a high structural water content (Patent Document 6).

Regarding the structural water of electrolytic manganese dioxide, the structural water desorbed at 220°C to 240°C has a great influence on the crystal structure (Non-Patent Document 1).

Electrolytic manganese dioxide contains impurities, such as manganese with a low valence that is not effective as an oxidizing agent. "JIS K 1467 (Electrolytic Manganese Dioxide for Batteries) 3. Quality" specifies the amount of a substance effective as an oxidizing agent in an electrolytic manganese dioxide for a battery. That is, the capacity as a positive-electrode material in a battery increases with the amount of the substance effective as an oxidizing agent.

For example, an electrolytic manganese dioxide produced by controlling electrolysis conditions, such as the concentration of sulfuric acid in an electrolyte solution, has been proposed as an electrolytic manganese dioxide with good high-load characteristics (Patent Document 2), but in electrolysis under production conditions with a high concentration of sulfuric acid in an electrolyte solution, electrolytic manganese dioxide electrodeposited during electrolysis falls off an electrolytic electrode, and the production cannot be stable.

Thus, as a countermeasure against falling off an electrolytic electrode, a method of lowering the concentration of sulfuric acid in an electrolyte solution at the beginning of electrolysis and increasing the sulfuric acid concentration during electrolysis has been proposed (Patent Documents 4 and 5).

PRIOR ART DOCUMENTS

PATENT DOCUMENTS

Patent Document 1: Japanese Patent No. 6862763
Patent Document 2: Japanese Patent No. 4827501
Patent Document 3: U.S. patent No. 6527941
Patent Document 4: Japanese Patent No. 5428163
Patent Document 5: Japanese Unexamined Patent Application Publication No. 2021-39930
Patent Document 6: Japanese Patent No. 5136004

Non Patent Document

Non Patent Document 1: Tosoh Research & Technology Review, Vol. 49, No. 86, p. 21

DISCLOSURE OF INVENTION

TECHNICAL PROBLEM

According to the methods of Patent Documents 4 and 5, the electrolytic manganese dioxide is less likely to fall off even at a high concentration of sulfuric acid in the electrolyte solution, but the detailed falling conditions for the electrolytic manganese dioxide are unclear, and there is room for improvement in the high-load characteristics.

The electrolytic manganese dioxides with the features described in Patent Documents 1 to 4 and 6 do not have sufficient high-load characteristics. Furthermore, due to the production process of treating electrolytic manganese dioxide with sulfuric acid in Patent Document 6, residual sulfuric acid may cause corrosion of the battery can inside the battery.

Although the electrolytic manganese dioxide of Patent Document 5 has good high-load characteristics, the amount of the substance effective as an oxidizing agent is small.

An object of the present disclosure is to provide an electrolytic manganese dioxide used as a positive-electrode active material of a manganese battery and an alkaline manganese battery with high battery performance, particularly high-load characteristics, and a high capacity, the electrolytic manganese dioxide containing a certain amount or more of manganese and having a high structural water content defined by the mass loss at 110°C to 240°C and a method for producing an electrolytic manganese dioxide that does not fall off during electrolysis.

SOLUTION TO PROBLEM

In the present disclosure, an electrolytic manganese dioxide used as a positive-electrode active material of a manganese battery, particularly an alkaline manganese battery, has been repeatedly studied. As a result, it was found that effective oxygen in manganese dioxide is increased by setting the manganese content in a dry state to a certain content, and high-load characteristics are improved by setting the amounts of structural water and total structural water defined by the mass loss at 110°C to 240°C in a certain range.

The present invention is defined in the claims, and the gist of the present disclosure is as follows:

[1] An electrolytic manganese dioxide with an alkaline potential of 290 mV or more and less than 350 mV, a manganese content of 60.3% by mass or more and 63.0% by mass or less in a dry state, a structural water content of 2.60% by mass or more as defined by mass loss at 110°C to 240°C and a total structural water content of 4.10% by mass or more.

[2] The electrolytic manganese dioxide according to [1], wherein the alkaline potential is more than 310 mV.

[3] The electrolytic manganese dioxide according to [1] or [2], wherein a sulfate group ($SO_4$) content is 1.5% by mass or less.

[4] The electrolytic manganese dioxide according to any one of [1] to [3], wherein a sodium content is 10 ppm by mass or more and 5,000 ppm by mass or less.

[5] A method for producing the electrolytic manganese dioxide according to any one of [1] to [4], wherein a manganese ion concentration [Mn2+] is lower at the end of electrolysis than at the beginning of the electrolysis, and a period satisfying both of the following formulae 1) and 2) exceeds 6 days: wherein J denotes an electric current density during the electrolysis ($A/dm^2$), and X denotes a ratio of the manganese ion concentration [$Mn^{2+}$] (mol/L) to a square of a hydrogen ion concentration [$H^+$] (mol/L), that is, $X = [Mn^{2+}]/[H^+]^2$, in an electrolyte solution.

$$J \leq X+0.22 \qquad 1)$$

$$X/J^2 \leq 2.10 \qquad 2)$$

[6] The method for producing the electrolytic manganese dioxide according to [5], wherein the electrolyte solution is a mixed solution of manganese sulfate and sulfuric acid.

[7] The method for producing electrolytic manganese dioxide according to [5] or [6], wherein the manganese ion concentration at the beginning of the electrolysis is 25 g/L or more.

[8] A positive-electrode active material for a battery, comprising the electrolytic manganese dioxide according to any one of [1] to [4].

ADVANTAGEOUS EFFECTS OF INVENTION

The present disclosure can provide an electrolytic manganese dioxide with better high-load characteristics than a known electrolytic manganese dioxide.

BRIEF DESCRIPTION OF DRAWINGS

[Fig. 1] Fig. 1 is a plot of J versus X for all Examples and Comparative Examples.
[Fig. 2] Fig. 2 is a plot of electric potential versus $X/J^2$ for all Examples and Comparative Examples 1 to 5.

DESCRIPTION OF EMBODIMENTS

The present disclosure will be described with reference to an example of an embodiment thereof. It is also intended that the present disclosure includes any combination of each configuration and parameter disclosed herein and any combination of an upper limit and a lower limit of values disclosed herein. Main terms in the present embodiments are as described below.

An electrolytic manganese dioxide according to the present embodiment has an alkaline potential of 290 mV or more and less than 350 mV. An alkaline potential of less than 290 mV results in a decrease in battery performance, particularly high-load discharge characteristics, and an alkaline potential of 350 mV or more results in a battery with a higher output but with poorer cycle characteristics. The alkaline potential is preferably more than 310 mV and less than 350 mV, more preferably 320 mV or more and less than 350 mV, still more preferably 330 mV or more and less than 350 mV.

The electrolytic manganese dioxide according to the present embodiment has a manganese content of 60.3% by mass or more and 63.0% by mass or less in a dry state. A manganese content of less than 60.3% by mass results in a distorted crystal structure in an undesirable direction. This lowers the ratio of a substance that effectively functions as an oxidizing agent, that is, the ratio of a substance defined as manganese dioxide in an electrolytic manganese dioxide for a battery defined in "JIS K 1467 3. Quality" (hereinafter also referred to as the "$MnO_2$ content"). At a manganese content of more than 63.0% by mass, the structural water cannot exist in the electrolytic manganese dioxide. The manganese content of the electrolytic manganese dioxide according to the present embodiment in a dry state is preferably 60.3% by mass or more and 62.0% by mass or less, more preferably 60.3% by mass or more and 61.5% by mass or less.

The term "dry state" refers to a state in which adhering water is removed from the electrolytic manganese dioxide according to the present embodiment, and the amount of the adhering water can be measured in accordance with "JIS K 1467 5.3 Measurement of water content" described in <Measurement of Adhering Water Content> described later.

The electrolytic manganese dioxide according to the present embodiment has a structural water content of 2.60% by mass or more as defined by the mass loss at 110°C to 240°C (hereinafter also referred to as a "240°C structural water content"). A mass 240°C structural water content of less than 2.60% by mass results in a crystal structure with a small strain, a decrease in output and a significant deterioration of high-load characteristics. The 240°C structural water content is preferably 2.70% by mass or more, more preferably 2.80% by mass or more. Furthermore, due to an increase in the strain of the crystal structure and collapse of the structure, the 240°C structural water content is preferably 4.0% by mass or less. The mass 240°C structural water content is measured in accordance with <Measurement of Structural Water Content> described in Examples.

The electrolytic manganese dioxide according to the present embodiment has a total structural water content (a structural water content defined by the mass loss at 110°C to 320°C in thermal analysis) of 4.10% by mass or more. Structural water other than the structural water content defined by the mass loss at 240°C does not affect the output itself. However, a total structural water content of less than 4.10% by mass results in restricted proton diffusion and poorer discharge characteristics. The total structural water content is preferably 4.20% by mass or more, more preferably 4.30% by mass or more. An excessive structural water content results in a decrease in the amount of manganese in the composition, and the total structural water content is therefore preferably 5.0% by mass or less. The total structural water content is measured in accordance with <Measurement of Structural Water Content> described in Examples.

The structural water content can be measured with a thermal analyzer (trade name: STA 300, manufactured by Hitachi High-Tech Corporation) in a nitrogen stream at a heating rate of 10°C/min using a predetermined temperature program.

More specifically, adsorbed water is removed by heating to 110°C and holding for 16 hours. This is followed by heating to 240°C and holding for 12 hours. This is followed by heating to 320°C and holding for 12 hours. Finally, the mass of the electrolytic manganese dioxide after heating to 620°C and holding for 1 hour is defined as the final mass.

The ratio of the mass loss at 110°C to 240°C to the final mass is defined as the 240°C structural water content (% by mass), and the ratio of the mass loss at 110°C to 320°C to the final mass is defined as the total structural water content (% by mass).

The electrolytic manganese dioxide according to the present embodiment may contain a sulfate group ($SO_4$), and the sulfate group ($SO_4$) content is preferably 0% by mass or more and 1.5% by mass or less. As an alkaline manganese battery, this can improve the high-load discharge characteristics and can maintain mass the storage characteristics of the dry battery high. The sulfate group ($SO_4$) content is more preferably 0% by mass or more and 1.3% by mass or less.

The electrolytic manganese dioxide according to the present embodiment preferably has a sodium content of 10 ppm by mass or more and 5,000 ppm by mass or less. As an alkaline manganese battery, this can further reduce corrosiveness to a metallic material, such as a can body, and maintain the high-load discharge characteristics. The sodium content is more preferably 10 ppm by mass or more and 3,000 ppm by mass or less. Sodium contained in the electrolytic manganese dioxide is mainly derived from sodium hydroxide used as a neutralizing agent.

The sulfate group ($SO_4$) and sodium contents (% by mass) of the electrolytic manganese dioxide according to the present embodiment can be determined by ICP measurement using a general ICP apparatus (for example, apparatus name: OPTIMA 3000DV, manufactured by PERKIN ELMER). The $SO_4$ content (% by mass) is the ratio of the mass of the S element contained in the electrolytic manganese dioxide in terms of $SO_4$ to the mass of the electrolytic manganese dioxide and can be determined by multiplying the concentration (% by mass) of the S element determined by ICP measurement by $SO_4$/S (atomic weight ratio) for conversion into $SO_4$.

The half-width of the (110) plane in XRD measurement of the electrolytic manganese dioxide according to the present embodiment (hereinafter also simply referred to as "half-width") is preferably 2.00 degrees or more and 2.31 degrees or less, more preferably 2.05 degrees or more and less than 2.20 degrees. A half-width in this range results in crystallinity suitable for improving the output characteristics.

The half-width may be measured by a method described in <Measurement of Half-width by XRD> of Examples. More specifically, a powder X-ray diffraction pattern (XRD pattern) is obtained by measurement with a measuring apparatus (for example, Ultima IV, manufactured by Rigaku Corporation) under the following conditions.

Target (light source): CuKα ($\lambda$ = 1.5418 angstroms)
Output: 1.6 kW (40 mA-40 kV)
Filter: Kβ filter
Divergence slit: 1 degree
Divergence height-limiting slit: 10 mm
Scattering slit: release
Light-receiving slit: release
Scan mode: continuous
Scanning speed: 4.000 degrees/min
Sampling width: 0.04 degrees (2θ/θ)
Number of integrations: 1
Measurement range: 10 to 90 degrees (2θ/θ)

The XRD pattern (XRD data) is analyzed using analysis software (for example, PDXL2), and an XRD peak with a peak top at 2θ = 22 ± 1 degrees is regarded as a peak of the (110) plane to determine the integral width thereof. The apparatus error is corrected by subtracting the half-width of a reference material (an α-quartz powder, manufactured by NIST) from the integral width, and the resulting value may be taken as the half-width.

Next, a method for producing electrolytic manganese dioxide according to the present embodiment will be described.

In the method for producing electrolytic manganese dioxide according to the present embodiment, while adjusting the concentration of manganese ions in an electrolyte solution so as to be lower at the end of electrolysis than at the beginning of the electrolysis, the electrolyte solution composition and the electric current density are adjusted so that a period satisfying both of the following relational expressions 1) and 2) exceeds 6 days: wherein J denotes the electric current density during electrolysis ($A/dm^2$), and X denotes the ratio of the manganese ion concentration [$Mn^{2+}$] (mol/L) to the square of the hydrogen ion concentration [$H^+$] (mol/L) (that is, X = [$Mn^{2+}$]/[$H^+$]$^2$) in the electrolyte solution:

$$J \leq X+0.22 \qquad 1)$$

$$X/J^2 \leq 2.10 \qquad 2)$$

In other words, in the method for producing electrolytic manganese dioxide according to the present embodiment, the concentration of manganese ions in the electrolyte solution is lower at the end of electrolysis than at the beginning of the electrolysis, and the period satisfying the relational expressions 1) and 2) exceeds 6 days.

$$J \leq X+0.22 \qquad 1)$$

$$X/J^2 \leq 2.10 \qquad 2)$$

In the relational expressions 1) and 2), J denotes the electric current density (A/dm$^2$), and X denotes the ratio of the manganese ion concentration [Mn$^{2+}$] (mol/L) to the square of the hydrogen ion concentration [H$^+$] (mol/L) in the electrolyte solution.

Thus, an electrolytic manganese dioxide with an alkaline potential of 290 mV or more and less than 350 mV, a manganese ratio of 60.3% by mass or more and 63.0% by mass or less in a dry state, a mass 240°C structural water content of 2.60% by mass or more and a total structural water content of 4.10% by mass or more can be produced without falling off an electrode. When the relational expression 1) (that is, $J \leq X + 0.22$) is not satisfied, the electrolytic manganese dioxide falls off the electrode during the electrolysis, which hinders the production. When the relational expression 2) (that is, $X/J^2 \leq 2.10$) is not satisfied, the electric potential of the electrolytic manganese dioxide decreases, and the high-load characteristics deteriorate. The manganese content of the electrolytic manganese dioxide can be increased by adjusting the concentration of manganese ions in the electrolyte solution to be lower at the end of electrolysis than at the beginning of the electrolysis (the concentration of manganese ions in the electrolyte solution is lower at the end of electrolysis than at the beginning of the electrolysis).

A sulfuric acid-manganese sulfate mixed solution is preferably used as an electrolyte solution in an electrolytic bath.

The method for producing electrolytic manganese dioxide according to the present embodiment is not particularly limited as long as the electric current density, the manganese ion concentration and the hydrogen ion concentration during electrolysis satisfy the relational expression 1) and the relational expression 2), but to increase the current efficiency during electrolysis, the temperature of the electrolyte solution is preferably 80°C or more and 98°C or less, more preferably 95°C or more and 98°C or less.

Aqueous manganese sulfate is preferably used as an electrolyte replenisher.

In the method for producing electrolytic manganese dioxide according to the present embodiment, the electrolyte solution composition may be adjusted with the electrolyte replenisher by any method, for example, by replenishing the aqueous manganese sulfate (electrolyte replenisher) and extracting the electrolyte solution. Thus, manganese ions in the electrolyte solution are converted into electrolytic manganese dioxide by electrolysis and precipitate. This increases the concentration of sulfate ions in the electrolyte solution. Replenishing the electrolyte solution with the electrolyte replenisher increases the concentration of manganese ions in the electrolyte solution. Consequently, electrolytic manganese dioxide can be continuously produced. Thus, the electrolyte solution composition can be adjusted so that the concentration of manganese ions in the electrolyte solution is lower at the end of electrolysis than at the beginning of the electrolysis by controlling the replenishment of the electrolyte replenisher and the extraction of the electrolyte solution so that the amount of manganese ions consumed by the precipitation of electrolytic manganese dioxide is larger than the amount of manganese ions supplied by the electrolyte replenisher.

In the method for producing electrolytic manganese dioxide according to the present embodiment, the electric current density during electrolysis is, for example, but not limited to, preferably 0.2 A/dm$^2$ or more and 0.7 A/dm$^2$ or less, more preferably 0.3 A/dm$^2$ or more and 0.6 A/dm$^2$ or less.

The method for producing electrolytic manganese dioxide according to the present embodiment is not particularly limited as long as the electric current density, the manganese ion concentration and the hydrogen ion concentration during the electrolysis satisfy the relational expressions 1) and 2), but for convenience of the production method in which the manganese ion concentration is decreased during the electrolysis, manganese ions need to be present in the electrolyte solution to some extent at the beginning of the electrolysis, and the manganese ion concentration at the beginning of the electrolysis is preferably, for example, 25 g/L or more and 50 g/L or less.

A method for producing electrolytic manganese dioxide according to the present disclosure may include a step of grinding electrolytic manganese dioxide produced by electrolysis.

For the grinding, for example, a roller mill, a jet mill or the like can be used.

The roller mill is, for example, a centrifugal roller mill or a vertical Loesche mill. Among the roller mills, a roller mill that can grind a raw material with a micro-Vickers hardness of 400 HV (JIS Z 2244) or more and has a mill motor of 20 kW or more and 150 kW or less is preferred in terms of cost, durability and suitability for industrial use.

A method of using the electrolytic manganese dioxide according to the present embodiment as a positive-electrode active material of an alkaline manganese battery is not particularly limited as long as the electrolytic manganese dioxide is mixed with an additive by a well-known method to produce a positive-electrode mixture, and, for example, a mixed powder can be prepared by adding graphite for imparting electrical conductivity and an electrolyte solution to the electrolytic manganese dioxide (the positive-electrode active material) and can be pressure-formed into a disk shape or a ring shape to produce a positive-electrode mixture as a powder formed body. The positive-electrode active material, a negative electrode, a negative-electrode current collector, a separator and an electrolyte solution are placed in a positive-electrode can, and the can is sealed to produce a battery (that is, an alkaline manganese battery).

EXAMPLES

Although the present disclosure will be described in more detail below with reference to Examples and Comparative Examples, the present disclosure is not limited to these Examples.

<Measurement of Alkaline Potential>

The alkaline potential of the electrolytic manganese dioxide according to the present embodiment was measured in 40% by weight aqueous KOH as described below.

0.9 g of graphite was added as an electrically conductive agent to 3 g of the electrolytic manganese dioxide according to the present embodiment to prepare a mixed powder, and 4 mL of 40% by weight aqueous KOH was added to the mixed powder to prepare a mixture slurry of the electrolytic manganese dioxide, the graphite and the aqueous KOH. The electric potential of the mixture slurry was measured using a mercury/mercury oxide reference electrode as a reference, and the obtained value was defined as the alkaline potential of the electrolytic manganese dioxide according to the present embodiment.

<Measurement of Structural Water Content>

The structural water content of the electrolytic manganese dioxide according to the present embodiment was measured with a thermal analyzer (trade name: STA 300, manufactured by Hitachi High-Tech Corporation) as described below.

The electrolytic manganese dioxide according to the present embodiment was placed in the thermal analyzer, was heated to 110°C in a nitrogen stream and was held for 16 hours to remove adsorbed water. This is followed by heating to 240°C and holding for 12 hours, heating to 320°C and holding for 12 hours and heating to 620°C and holding for 1 hour to remove a substance that can be desorbed from the electrolytic manganese dioxide, thereby determining the final mass. The mass of the structural water in which the mass loss at 110°C to 240°C is defined by the mass loss at 110°C to 240°C was defined as the mass of 240°C structural water, and the mass loss at 110°C to 320°C was defined as the mass of the total structural water. The mass of the structural water was divided by the final mass to determine the structural water content (% by mass) of the electrolytic manganese dioxide according to the present embodiment.

The heating rate in the thermal analysis for the measurement of the structural water content was 10°C/min. The desorbed product at 240°C to 320°C was $H_2O$ as determined by mass spectrometry thereof.

The mass spectrometry was performed by measuring a spectrum corresponding to $m/z = 18$ using a mass spectrometer (apparatus name: MS 9610, manufactured by Bruker AXS K.K.).

<Measurement of Adhering Water Content>

The adhering water content of a sample (electrolytic manganese dioxide) was measured in accordance with "JIS K 1467 5.3 Measurement of water content".

More specifically, approximately 5 g of a sample was weighed in a flat weighing bottle, was spread so as to have an almost uniform thickness and was covered with a lid.

The mass weighed with a balance to the nearest 0.1 mg is denoted by S1 (g).

Furthermore, the lid was removed in a dryer kept at 107 $\pm$ 2°C, and the sample was dried by heating for 2 hours, was then covered with the lid, was placed in a desiccator and was allowed to cool to room temperature.

Subsequently, the mass weighed with a balance to the nearest 0.1 mg was denoted by S0 (g).

The adhering water content H was calculated from S0 (g) and S1 (g) using the following formula.

$$\text{Adhering water content H (\% by mass)} = (S1 - S0)/S1 \times 100$$

<Measurement of Manganese (Mn) Content in Dried State>

The manganese (Mn) content of a sample (electrolytic manganese dioxide) in a dried state (that is, at the time of eliminating the adhering water content) was determined by the following method in accordance with "JIS M 8232 5.3 Potassium permanganate titration method (potentiometric titration method)".

120 g of sodium diphosphate decahydrate was dissolved in pure water to prepare 1000 ml of an aqueous solution (hereinafter also referred to as "aqueous sodium diphosphate").

1 g of a sample (electrolytic manganese dioxide) was weighed to the nearest 1 mg. The weighed value is denoted by M (g).

The weighed sample (electrolytic manganese dioxide) was transferred to a beaker, 30 mL of 35% by mass hydrochloric acid was added thereto, and the sample was heated at 100°C for 10 minutes.

Furthermore, 5 mL of 60% by mass nitric acid and 10 mL of 70% by mass perchloric acid were added thereto, followed by heating at 100°C for 10 minutes.

The sample (electrolytic manganese dioxide) was then allowed to cool to room temperature and was completely dissolved by adding 20 mL of hydrochloric acid (1 + 4). The resulting solution was entirely transferred to a 250-mL volumetric flask, and the volumetric flask was filled with pure water.

50 mL of the resulting solution was transferred to a beaker, and 250 mL of a sodium diphosphate solution was added with manual stirring. The pH was then adjusted to 6.5 to 7.0 using a pH meter (apparatus name: D-51, manufactured by Horiba, Ltd.) while adding hydrochloric acid (1 + 4).

20 mmol/L of a potassium permanganate solution was added to the solution after the pH adjustment, and potentiometric titration was performed using a potentiometer (trade name: AT-610, manufactured by Kyoto Electronics Manufacturing Co., Ltd.). The endpoint was defined as the point at which the change in the indicated value of the potential difference reached the maximum. The addition amount of the potassium permanganate standard solution at the time of reaching the endpoint is denoted by V1 (mL).

The addition amount of the potassium permanganate standard solution when the above operation is performed without adding the sample is denoted by V2 (mL).

The manganese (Mn) content of the sample (electrolytic manganese dioxide) in the dried state was calculated using the following formula from V1 (mL) and V2 (mL) thus determined.

Manganese (Mn) content (% by mass) of sample (electrolytic manganese dioxide) = $(V1 - V2) \times F1 \times 0.004395/(m1/5) \times 100 \times K$

F1: normality of 20 mmol/L potassium permanganate standard solution
m1: weighed value (g) of sample (electrolytic manganese dioxide)
K: conversion factor to dried sample = 100/(100 - adhering water content H (% by mass))

<Measurement of $MnO_2$ Content>

The $MnO_2$ content of a sample (electrolytic manganese dioxide) was measured by the method described below in accordance with "JIS K 1467 5.2 Manganese dioxide ($MnO_2$)".

9.8 g of oxalic acid dihydrate was dissolved in 800 mL of pure water, and 200 mL of sulfuric acid (1 + 1) was added to prepare an oxalic acid solution (7 g/L).

0.25 g of the sample (electrolytic manganese dioxide) was weighed to the nearest 0.1 mg in a conical flask, and 50 mL of an oxalic acid solution (7 g/L) was added thereto with a whole pipette. The sample (electrolytic manganese dioxide) was completely dissolved by stirring with a magnetic stirrer for 20 minutes while keeping the temperature in a water bath so that the liquid temperature in the flask was 60°C. The amount of the solution was then adjusted to 60 ml.

Titration was performed with a 0.02 mol/L potassium permanganate solution while stirring with a magnetic stirrer. The endpoint was defined as a time point at which pale red color did not disappear for 30 seconds or more, and the amount of the potassium permanganate solution added dropwise to reach the endpoint was denoted by v1 (mL).

The amount of the potassium permanganate solution added dropwise when the above operation is performed without adding the sample is denoted by V2 (mL).

The $MnO_2$ content (% by mass) of the sample (electrolytic manganese dioxide) was calculated using the following formula from v1 (mL) and v2 (mL) thus determined.

$MnO_2$ content (% by mass) of sample (electrolytic manganese dioxide) = $(v1 - v2) \times F2 \times 0.004347/m2 \times 100 \times K$

F2: normality of 0.02 mol/L potassium permanganate solution
m2: sample weight (g)
K: conversion factor to dried sample = 100/(100 - adhering water H (% by mass))

<Measurement of Sulfate Group and Sodium Contents>

The sulfate group and sodium contents of electrolytic manganese dioxide were determined by dissolving a sample (electrolytic manganese dioxide) in a mixed solution of nitric acid and a hydrogen peroxide solution and measuring the solution by ICP (apparatus name: OPTIMA 3000DV, manufactured by PERKIN ELMER).

The $SO_4$ content (% by mass) was determined by multiplying the concentration (% by mass) of the S element determined by ICP measurement by $SO_4/S$ (atomic weight ratio) for $SO_4$ conversion.

<Measurement of Half-Width by XRD>

The half-width was determined by the above-described method from an XRD pattern measured with a powder X-ray diffractometer (trade name: Ultima IV, manufactured by Rigaku Corporation) under the following conditions.

- Target (radiation source): $CuK\alpha$ ($\lambda$ = 1.5418 angstroms)
- Output: 1.6 kW (40 mA-40 kV)
- Filter: $K\beta$ filter
- Divergence slit: 1 degree
- Divergence height-limiting slit: 10 mm
- Scattering slit: release
- Light-receiving slit: release
- Scan mode: continuous
- Scanning speed: 4.000 degrees/min
- Sampling width: 0.04 degrees ($2\theta/\theta$)
- Number of integrations: 1
- Measurement range: 10 to 90 degrees ($2\theta/\theta$)

The XRD data pattern thus obtained was analyzed using analysis software (PDXL2) attached to the powder X-ray diffractometer to determine the integral width of the (110) plane near $2\theta$ = 22 degrees.

A reference material for XRD (an $\alpha$-quartz powder manufactured by NIST) was measured in advance to correct an error of the measuring apparatus, and the half-width was obtained by subtracting an integral width of the reference material from an integral width of LMO.

<Measurement of High-Load Discharge Characteristics>

The high-load discharge characteristics were measured as described below.

65 g of a sample (electrolytic manganese dioxide), 2.9 g of graphite and 5.1 g of 37% by weight aqueous potassium hydroxide were mixed in a V-type mixer (apparatus name: VM-2, manufactured by Tsutsui Rikagaku Kikai) for 20 minutes, were then rolled with a roller compactor (apparatus name: 16-056, manufactured by Nishimura Machinery) at a pressure of 30 MPa and were classified into an oversize fraction on a sieve with an aperture of 180 $\mu$m and an undersize fraction on a sieve with an aperture of 1 mm to prepare positive-electrode mixture granules.

3.5 g of the positive-electrode mixture granules were pressed at 2.7 t/cm$^2$ using a mold with an outer diameter of 13 mm$\varphi$ and an inner diameter of 9 mm$\varphi$ to prepare a ring-shaped molded body. Three ring-shaped molded bodies were placed in a positive-electrode can for a size AA battery and were then subjected to secondary formation by pressing at 2.7 t/cm$^2$.

A cylindrical separator was placed inside the positive-electrode mixture secondarily formed into a ring shape, 1.6 g of 37% by weight aqueous potassium hydroxide was added dropwise to the bottom portion of the dry battery and was allowed to stand for 30 minutes, 6 g of a negative electrode gel prepared by mixing 68% by weight of Zn particles with 37% by weight aqueous potassium hydroxide in which poly(acrylic acid) was dissolved was injected inside the cylindrical separator, and then the dry battery was sealed with a negative electrode can provided with a current collector rod to prepare a dry battery (alkaline manganese battery).

After dry batteries (alkaline manganese batteries) using the electrolytic manganese dioxides of Examples and Comparative Examples were stored in a thermostat at 20°C and were allowed to stand for 7 days, the number of 1.5 W pulses was measured in accordance with "1.5 W Discharge Method" defined by the American National Standards Institute (ANSI), a dry battery was prepared as a reference in the same manner, and the ratio of the number of electrical discharges to the number of 1.5 W pulses of a dry battery prepared using a sample subjected to an electrical discharge test (Comparative Example 4 described later) was defined as the high-load characteristics (that is, the ratio of the number of 1.5 W pulses of the electrolytic manganese dioxides of Examples and Comparative Examples to the number of 1.5 W pulses of the reference (Comparative Example 4 described later) was defined as the high-load characteristics).

The number of 1.5 W pulses according to "1.5 W Discharge Method" (hereinafter also referred to simply as "the number of 1.5 W pulses") in Examples and Comparative Examples was measured by the following method.

A dry batter thus produced was discharged at a temperature of 20 $\pm$ 1°C at 1500 mW for 2 seconds and was then discharged at 650 mW for 28 seconds in a discharge step for 30 seconds. This discharge step as one pattern was performed 10 patterns for a total of 5 minutes and was suspended for 55 minutes. A cycle of the discharge step and the suspension for one hour was repeated to measure the number of cycles when the closed circuit voltage of the dry battery reached 1.05 V. The measurement was performed three times, and the arithmetic mean of the three numbers of cycles was defined as the number of 1.5 W pulses.

The high-load characteristics (%) is expressed by the following formula.

High-load characteristics (%) = (number of 1.5 W pulses (times) in Examples and Comparative Examples)/(number of 1.5 W pulses (times) in reference (Comparative Example 4 described later)) $\times$ 100

(Manganese Ion Concentration, Sulfuric Acid Concentration and Hydrogen Ion Concentration)

The concentration of manganese ions, the concentration of sulfuric acid and the concentration of hydrogen ions in the electrolyte solution and in the electrolyte replenisher were determined as described below. More specifically, the hydrogen ion concentration and the sulfuric acid concentration were determined by neutralization titration, and the hydrogen ion concentration determined by the neutralization titration and a concentration of 1/2 times the hydrogen ion concentration were defined as the sulfuric acid concentration. The manganese ion concentration was determined by ICP analysis.

Example 1

Electrolysis was performed using an electrolytic bath including a heating apparatus, in which a titanium plate with a height of 250 mm, a width of 200 mm and a thickness of 5 mm as an anode and a graphite plate with a height of 250 mm, a width of 200 mm and a thickness of 10 mm as a cathode were suspended so as to face each other.

A sulfuric acid-manganese sulfate aqueous mixture with a hydrogen ion concentration of 0.571 mol/L and a manganese ion concentration of 0.570 mol/L was used as an electrolyte solution at the beginning of electrolysis. A predetermined amount of the electrolyte solution was poured into the electrolytic bath so that the anode and the graphite plate were immersed in the electrolyte solution. Electrolysis was started at a temperature of 97°C and at an electric current density during electrolysis (hereinafter referred to as "electrolysis current density") of 0.34 A/dm$^2$. Aqueous manganese sulfate with a manganese concentration of 38 g/L was used as an electrolyte replenisher and was passed through the electrolytic bath. As electrolytic manganese dioxide precipitates by electrolysis, the sulfuric acid concentration (and the hydrogen ion concentration) of the electrolyte solution during electrolysis increases, and the manganese ion concentration decreases. Thus, the electrolyte solution was appropriately collected to adjust the feed rate of the electrolyte replenisher while appropriately analyzing the sulfuric acid concentration and the manganese ion concentration thereof, and it was confirmed that the hydrogen ion concentration reached 1.16 mol/L and the manganese ion concentration reached 0.197 mol/L in the electrolyte solution 5 days after the start of the electrolysis. The electrolysis was then continued while maintaining this state (that is, the state that the hydrogen ion concentration was 1.16 mol/L and the manganese ion concentration was 0.197 mol/L in the electrolyte solution) for 10 days (total electrolysis period: 15 days).

During the electrolysis, manganese dioxide did not fall off the anode. X (that is, the ratio of the manganese ion concentration [Mn$^{2+}$] to the square of the hydrogen ion concentration [H$^+$] (mol/L) of the electrolyte solution; X = [Mn$^{2+}$]/[H$^+$]$^2$) from the 6th day after the start of the electrolysis to the end of the electrolysis was 0.146, and the relational expressions 1) and 2) were satisfied for 10 days as described below.

$$(0.34) \leq (0.146) + 0.22 = (0.366) \qquad 1)$$

$$(0.146)/(0.34)^2 = (1.26) \leq 2.10 \qquad 2)$$

After the electrolysis, electrodeposited plate-like electrolytic manganese dioxide was washed with pure water and was then ground to produce a ground product of the electrolytic manganese dioxide. The ground product was then put into a water tank to form a slurry. A neutralization treatment was performed by adding aqueous sodium hydroxide to the slurry with stirring so that the pH of the slurry was 4.2. The electrolytic manganese dioxide was then washed with water, was separated by filtration, was dried and was then passed through a sieve with an aperture of 63 $\mu$m to produce an electrolytic manganese dioxide powder.

The electrolytic manganese dioxide had a half-width of 2.31 degrees.

Evaluation results of the electrolytic manganese dioxide in each Example are shown below in the table.

Example 2

Electrolysis was performed in the same manner as in Example 1 except that the electrolysis current density was 0.40 A/dm$^2$, aqueous manganese sulfate with a manganese concentration of 43 g/L was used as an electrolyte replenisher, and the electrolyte solution had a hydrogen ion concentration of 1.12 mol/L and a manganese ion concentration of 0.331 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.

During the electrolysis, manganese dioxide did not fall off the anode. X from the 6th day after the start of the electrolysis to the end of the electrolysis was 0.264, and the relational expressions 1) and 2) were satisfied for 10 days as described below.

$$(0.40) \leq (0.264) + 0.22 = (0.484) \qquad 1)$$

$$(0.264)/(0.40)^2 = (1.65) \leq 2.10 \qquad 2)$$

The electrolytic manganese dioxide had a half-width of 2.26 degrees.

Example 3

Electrolysis was performed in the same manner as in Example 2 except that the electrolysis current density was 0.37 A/dm$^2$. During the electrolysis, manganese dioxide did not fall off the anode. X from the 6th day after the start of the electrolysis to the end of the electrolysis was 0.264, and the relational expressions 1) and 2) were satisfied for 10 days as described below.

$$(0.37) \leq (0.264) + 0.22 = (0.484) \qquad 1)$$

$$(0.264)/(0.37)^2 = (1.93) \leq 2.10 \qquad 2)$$

The electrolytic manganese dioxide had a half-width of 2.24 degrees.

Example 4

Electrolysis was performed at an electric current density of 0.34 A/dm$^2$ and a hydrogen ion concentration of 0.765 mol/L and a manganese ion concentration of 0.501 mol/L in the electrolyte solution at the beginning of the electrolysis while maintaining the solution composition for 7 days. X for 7 days after the start of the electrolysis was 0.856, and as shown below, the relational expression 1) was satisfied, but the relational expression 2) was not satisfied.

$$(0.34) \leq (0.856) + 0.22 = (1.08) \qquad 1)$$

$$(0.856)/(0.34)^2 = (7.41) > 2.10 \qquad 2)$$

Subsequently, while continuing the electrolysis, aqueous manganese sulfate with a manganese concentration of 45 g/L was used as an electrolyte replenisher from the 8th day to the 9th day after the start of the electrolysis, and the electrolyte solution composition was continuously changed. From the 9th day after the start of the electrolysis, the electrolysis was further performed for 7 days while maintaining the state that the hydrogen ion concentration was 1.22 mol/L and the manganese ion concentration was 0.306 mol/L (total electrolysis period: 15 days).

During the electrolysis, manganese dioxide did not fall off the anode. X from the 9th day after the start of the electrolysis to the end of the electrolysis was 0.206, and the relational expressions 1) and 2) were satisfied for 7 days in the latter half of the electrolysis as described below.

$$(0.34) \leq (0.206) + 0.22 = (0.426) \qquad 1)$$

$$(0.206)/(0.34)^2 = (1.78) \leq 2.10 \qquad 2)$$

The electrolytic manganese dioxide had a half-width of 2.05 degrees.

The treatment after completion of the electrolysis was performed in the same manner as in Example 1.

Example 5

Electrolysis was performed in the same manner as in Example 1 except that the electrolysis current density was 0.37 A/dm$^2$, aqueous manganese sulfate with a manganese concentration of 43 g/L was used as an electrolyte replenisher, and the electrolyte solution at the end of the electrolysis had a hydrogen ion concentration of 1.22 mol/L and a manganese ion concentration of 0.273 mol/L. Both the concentration of hydrogen ions and the concentration of manganese ions in the electrolyte solution remained constant from the 6th day after the start of the electrolysis to the end of the electrolysis.

During the electrolysis, manganese dioxide did not fall off the anode. X from the 6th day after the start of the electrolysis to the end of the electrolysis was 0.183, and the relational expressions 1) and 2) were satisfied for 10 days as described below.

$$(0.37) \leq (0.183) + 0.22 = (0.403) \qquad 1)$$

$$(0.183)/(0.37)^2 = (1.34) \leq 2.10 \qquad 2)$$

The electrolytic manganese dioxide had a half-width of 2.19 degrees.

Example 6

Electrolysis was performed in the same manner as in Example 1 except that the electrolyte solution at the beginning of the electrolysis had a hydrogen ion concentration of 0.734 mol/L and a manganese ion concentration of 0.491 mol/L, and aqueous manganese sulfate with a manganese concentration of 45 g/L was used as an electrolyte replenisher, and the hydrogen ion concentration was 1.12 mol/L and the manganese ion concentration was 0.300 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.

During the electrolysis, manganese dioxide did not fall off the anode. X from the 6th day after the start of the electrolysis to the end of the electrolysis was 0.239, and the relational expressions 1) and 2) were satisfied for 10 days as described below.

$$(0.34) \leq (0.239) + 0.22 = (0.459) \qquad 1)$$

$$(0.239)/(0.34)^2 = (2.07) \leq 2.10 \qquad 2)$$

The electrolytic manganese dioxide had a half-width of 2.01 degrees.

Example 7

Electrolysis was performed in the same manner as in Example 1 except that the electrolysis current density was 0.40 A/dm$^2$, aqueous manganese sulfate with a manganese concentration of 43 g/L was used as an electrolyte replenisher, and the electrolyte solution had a hydrogen ion concentration of 1.18 mol/L and a manganese ion concentration of 0.295 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.

During the electrolysis, manganese dioxide did not fall off the anode. X from the 6th day after the start of the electrolysis to the end of the electrolysis was 0.212, and the relational expressions 1) and 2) were satisfied for 10 days as described below.

$$(0.40) \leq (0.212) + 0.22 = (0.432) \qquad 1)$$

$$(0.212)/(0.40)^2 = (1.32) \leq 2.10 \qquad 2)$$

The electrolytic manganese dioxide had a half-width of 2.23 degrees.

Example 8

Electrolysis was performed in the same manner as in Example 1 except that aqueous manganese sulfate with a manganese concentration of 41 g/L was used as an electrolyte replenisher, and the electrolyte solution had a hydrogen ion concentration of 1.24 mol/L and a manganese ion concentration of 0.222 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.
During the electrolysis, manganese dioxide did not fall off the anode. X from the 6th day after the start of the electrolysis to the end of the electrolysis was 0.144, and the relational expressions 1) and 2) were satisfied for 10 days as described below.

$$(0.34) \leq (0.144) + 0.22 = (0.364) \qquad 1)$$

$$(0.144)/(0.34)^2 = (1.24) \leq 2.10 \qquad 2)$$

The electrolytic manganese dioxide had a half-width of 2.12 degrees.

Example 9

Electrolysis was performed in the same manner as in Example 1 except that aqueous manganese sulfate with a manganese concentration of 38 g/L was used as an electrolyte replenisher, and the electrolyte solution had a hydrogen ion concentration of 1.16 mol/L and a manganese ion concentration of 0.207 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.
During the electrolysis, manganese dioxide did not fall off the anode. X from the 6th day after the start of the electrolysis to the end of the electrolysis was 0.154, and the relational expressions 1) and 2) were satisfied for 10 days as described below.

$$(0.34) \leq (0.154) + 0.22 = (0.374) \qquad 1)$$

$$(0.154)/(0.34)^2 = (1.33) \leq 2.10 \qquad 2)$$

The electrolytic manganese dioxide had a half-width of 2.12 degrees.

Example 10

Electrolysis was performed in the same manner as in Example 1 except that aqueous manganese sulfate with a manganese concentration of 36 g/L was used as an electrolyte replenisher, and the electrolyte solution had a hydrogen ion concentration of 1.08 mol/L and a manganese ion concentration of 0.193 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.
During the electrolysis, manganese dioxide did not fall off the anode. X from the 6th day after the start of the electrolysis to the end of the electrolysis was 0.165, and the relational expressions 1) and 2) were satisfied for 10 days as described below.

$$(0.34) \leq (0.165) + 0.22 = (0.385) \quad 1)$$

$$(0.165)/(0.34)^2 = (1.43) \leq 2.10 \quad 2)$$

The electrolytic manganese dioxide had a half-width of 2.14 degrees.

Comparative Example 1

In the same manner as in Example 1 of Japanese Unexamined Patent Application Publication No. 2021-39930, electrolysis was performed for 15 days in which the electrolyte replenisher was aqueous manganese sulfate with a manganese concentration of 45 g/L, while the manganese/sulfuric acid concentration ratio of the electrolyte solution was maintained at 0.25 at an electrolysis current density of 0.34 A/dm$^2$, the concentration of sulfuric acid in the electrolyte solution was 38 g/L and 63 g/L at the beginning of the electrolysis and at the end of the electrolysis, respectively, and the sulfuric acid concentration and the concentration of manganese ions in the electrolyte solution were continuously increased. The temperature of the electrolyte solution was 93°C until the sulfuric acid concentration reached 40 g/L and was changed to 97°C at the time when the sulfuric acid concentration reached 40 g/L.

During the electrolysis, manganese dioxide did not fall off the anode. At this time, the manganese ion concentration was 0.175 mol/L and the hydrogen ion concentration was 0.775 mol/L in the electrolyte solution at the beginning of the electrolysis, and the manganese ion concentration was 0.211 mol/L, the hydrogen ion concentration was 0.943 mol/L, and X of the solution composition was 0.237 on the 5th day after the start of the electrolysis, and the relationship between X and the electric current density J was as described below.

$$(0.34) \leq (0.237) + 0.22 = (0.457) \quad 1)$$

$$(0.237)/(0.34)^2 = (2.05) \leq 2.10 \quad 2)$$

The manganese ion concentration was 0.286 mol/L and the hydrogen ion concentration was 1.28 mol/L in the electrolyte solution at the end of the electrolysis, X of the solution composition at the end of the electrolysis was 0.175, and the formulae 1) and 2) were satisfied for 11 days from the 5th day to the 15th day after the start of the electrolysis as described below.

$$(0.34) \leq (0.175) + 0.22 = (0.395) \quad 1)$$

$$(0.175)/(0.34)^2 = (1.51) \leq 2.10 \quad 2)$$

The electrolytic manganese dioxide had a half-width of 2.30 degrees.

Comparative Example 2

Electrolysis was performed in the same manner as in Example 4 except that the solution composition at the beginning of the electrolysis (that is, the hydrogen ion concentration and the manganese ion concentration) was maintained for 9 days, the solution composition was changed during the 10th day to the 11th day after the start of the electrolysis, the concentration of manganese ions in the changed solution composition was 0.335 mol/L, and the changed solution composition was maintained for 5 days from the 11th day to the 15th day (the end of the electrolysis) after the start of the electrolysis.

During the electrolysis, manganese dioxide did not fall off the anode. X for 7 days after the start of the electrolysis was 0.856, and as shown below, the relational expression 1) was satisfied, but the relational expression 2) was not satisfied.

$$(0.34) \leq (0.856) + 0.22 = (1.076) \quad 1)$$

$$(0.856)/(0.34)^2 = (7.41) > 2.10 \quad 2)$$

X from the 11th day after the start of the electrolysis to the end of the electrolysis was 0.225, and the relational expressions 1) and 2) were satisfied for 5 days as described below.

$$(0.34) \leq (0.225) + 0.22 = (0.445) \qquad 1)$$

$$(0.25)/(0.34)^2 = (1.95) \leq 2.10 \qquad 2)$$

The electrolytic manganese dioxide had a half-width of 1.94 degrees.

Comparative Example 3

Electrolysis was performed in the same manner as in Example 1 except that aqueous manganese sulfate with a manganese concentration of 35 g/L was used as an electrolyte replenisher, and the electrolyte solution had a hydrogen ion concentration of 0.958 mol/L and a manganese ion concentration of 0.240 mol/L from the 6th day after the start of the electrolysis to the end of the electrolysis.
During the electrolysis, manganese dioxide did not fall off the anode. X from the 6th day after the start of the electrolysis to the end of the electrolysis was 0.262, and the relational expression 1) was satisfied but the relational expression 2) was not satisfied as described below.

$$(0.34) \leq (0.262) + 0.22 = (0.482) \qquad 1)$$

$$(0.262)/(0.34)^2 = (2.26) > 2.10 \qquad 2)$$

The electrolytic manganese dioxide had a half-width of 2.14 degrees.

Comparative Example 4

Electrolysis was performed in the same manner as in Comparative Example 2 except that the electrolyte solution at the beginning of the electrolysis had a hydrogen ion concentration of 0.734 mol/L and a manganese ion concentration of 0.519 mol/L, and the hydrogen ion concentration was 1.06 mol/L and the manganese ion concentration was 0.346 mol/L from the 11th day after the start of the electrolysis to the end of the electrolysis. Both the concentration of hydrogen ions and the concentration of manganese ions in the electrolyte solution remained constant from the 11th day after the start of the electrolysis to the end of the electrolysis.
During the electrolysis, manganese dioxide did not fall off the anode. X for 9 days after the start of the electrolysis was 0.963, and as shown below, the relational expression 1) was satisfied, but the relational expression 2) was not satisfied.

$$(0.34) \leq (0.963) + 0.22 = (1.183) \qquad 1)$$

$$(0.963)/(0.34)^2 = (8.33) > 2.10 \qquad 2)$$

X from the 11th day after the start of the electrolysis to the end of the electrolysis was 0.308, and the relational expression 1) was satisfied but the relational expression 2) was not satisfied as described below. That is, the relational expression 2) was not satisfied throughout the entire period.

$$(0.34) \leq (0.308) + 0.22 = (0.528) \qquad 1)$$

$$(0.308)/(0.34)^2 = (2.66) > 2.10 \qquad 2)$$

The electrolytic manganese dioxide had a half-width of 2.02 degrees.

Comparative Example 5

Electrolysis was performed in the same manner as in Example 4 except that the electrolyte solution had a hydrogen ion concentration of 0.754 mol/L and a manganese ion concentration of 0.491 mol/L for 7 days after the start of the electrolysis, and the electrolyte solution had a hydrogen ion concentration of 0.979 mol/L and a manganese ion concentration of 0.437 mol/L for 7 days from the 9th day after the start of the electrolysis to the end of the electrolysis.
During the electrolysis, manganese dioxide did not fall off the anode. X for 7 days after the start of the electrolysis was 0.864, and the relational expression 1) was satisfied but the relational expression 2) was not satisfied as described below.

$$(0.34) \leq (0.864) + 0.22 = (1.08) \qquad 1)$$

$$(0.864)/(0.34)^2 = (7.47) > 2.10 \qquad 2)$$

X from the 9th day after the start of the electrolysis to the end of the electrolysis was 0.456, and the relational expression 1) was satisfied but the relational expression 2) was not satisfied as described below. That is, the relational expression 2) was not satisfied throughout the entire period.

$$(0.34) \leq (0.456) + 0.22 = (0.676) \qquad 1)$$

$$(0.456)/(0.34)^2 = (3.94) > 2.10 \qquad 2)$$

Comparative Example 6

Electrolysis was performed in the same manner as in Example 1 except that the electrolysis current density was 0.37 A/dm$^2$, and the electrolyte solution had a hydrogen ion concentration of 1.31 mol/L and a manganese ion concentration of 0.233 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.
During the electrolysis, manganese dioxide fell off the anode and could not be recovered. X from the 6th day after the start of the electrolysis to the end of the electrolysis was 0.137, and the relational expression 2) was satisfied but the relational expression 1) was not satisfied as described below.

$$(0.37) > (0.136) + 0.22 = (0.356) \qquad 1)$$

$$(0.136)/(0.37)^2 = (0.992) \leq 2.10 \qquad 2)$$

Comparative Example 7

Electrolysis was performed in the same manner as in Example 1 except that the electrolysis current density was 0.40 A/dm$^2$, aqueous manganese sulfate with a manganese concentration of 33 g/L was used as an electrolyte replenisher, and the electrolyte solution had a hydrogen ion concentration of 1.02 mol/L and a manganese ion concentration of 0.173 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.
During the electrolysis, manganese dioxide fell off the anode and could not be recovered. X from the 6th day after the start of the electrolysis to the end of the electrolysis was 0.166, and the relational expression 2) was satisfied but the relational expression 1) was not satisfied as described below.

$$(0.40) > (0.166) + 0.22 = (0.386) \qquad 1)$$

$$(0.166)/(0.40)^2 = (1.04) \leq 2.10 \qquad 2)$$

Comparative Example 8

Electrolysis was performed in the same manner as in Example 1 except that the electrolysis current density was 0.40 A/dm$^2$.

During the electrolysis, manganese dioxide fell off the anode and could not be recovered. X from the 6th day after the start of the electrolysis to the end of the electrolysis was 0.146, and the relational expression 2) was satisfied but the relational expression 1) was not satisfied as described below.

$$(0.40) > (0.146) + 0.22 = (0.366) \quad 1)$$

$$(0.146)/(0.40)^2 = (0.915) \leq 2.10 \quad 2)$$

Comparative Example 9

Electrolysis was performed in the same manner as in Example 1 except that the electrolysis current density was 0.45 A/dm$^2$, and the electrolyte solution had a hydrogen ion concentration of 1.18 mol/L and a manganese ion concentration of 0.295 mol/L from the 6th day after the start of the electrolysis to the end of the electrolysis. Both the concentration of hydrogen ions and the concentration of manganese ions in the electrolyte solution remained constant from the 6th day after the start of the electrolysis to the end of the electrolysis.

During the electrolysis, manganese dioxide fell off the anode and could not be recovered. X from the 6th day after the start of the electrolysis to the end of the electrolysis was 0.211, and the relational expression 2) was satisfied but the relational expression 1) was not satisfied as described below.

$$(0.45) > (0.211) + 0.22 = (0.431) \quad 1)$$

$$(0.211)/(0.45)^2 = (1.05) \leq 2.10 \quad 2)$$

Comparative Example 10

Electrolysis was performed in the same manner as in Example 1 except that the electrolysis current density was 0.45 A/dm$^2$. During the electrolysis, manganese dioxide fell off the anode and could not be recovered. X from the 6th day after the start of the electrolysis to the end of the electrolysis was 0.146, and the relational expression 2) was satisfied but the relational expression 1) was not satisfied as described below.

$$(0.45) > (0.146) + 0.22 = (0.366) \quad 1)$$

$$(0.146)/(0.45)^2 = (0.723) \leq 2.10 \quad 2)$$

Comparative Example 11

Electrolysis was performed in the same manner as in Comparative Example 7 except that the electrolysis current density was 0.45 A/dm$^2$. During the electrolysis, manganese dioxide fell off the anode and could not be recovered. X from the 6th day after the start of the electrolysis to the end of the electrolysis was 0.166, and the relational expression 2) was satisfied but the relational expression 1) was not satisfied as described below.

$$(0.45) > (0.166) + 0.22 = (0.386) \quad 1)$$

$$(0.166)/(0.45)^2 = (0.821) \leq 2.10 \quad 2)$$

[Table 1]

| | 240°C structural water [mass%] | Total structural water content [mass%] | Manganese content in dry state [mass%] | Alkaline potential [mV] | SO$_4$ [mass%] | Na [ppm] | MnO$_2$ content [mass%] | High-load characteristics [%] |
|---|---|---|---|---|---|---|---|---|
| Example 1 | 2.92 | 4.34 | 60.5 | 331 | 1.23 | 450 | 93.7 | 130 |
| Example 2 | 2.96 | 4.35 | 60.5 | 334 | 1.30 | 460 | 93.3 | 127 |
| Example 3 | 2.77 | 4.25 | 60.5 | 331 | 1.30 | 410 | 93.4 | 125 |
| Example 4 | 2.69 | 4.18 | 60.9 | 333 | 1.25 | 1610 | 93.7 | 118 |
| Example 5 | 2.90 | 4.42 | 60.5 | 343 | 1.29 | 440 | 93.6 | 127 |
| Example 6 | 2.72 | 4.27 | 60.5 | 326 | 1.27 | 1560 | 93.4 | 115 |
| Example 7 | 2.69 | 4.18 | 60.9 | 333 | 1.25 | 1610 | 93.7 | 118 |
| Example 8 | 2,81 | 4.26 | 60.3 | 346 | 1.24 | 450 | 93.2 | 123 |
| Example 9 | 2.77 | 4.18 | 60.3 | 340 | 1.26 | 440 | 93.3 | 114 |
| Example 10 | 2.77 | 4.22 | 60.3 | 339 | 1.25 | 440 | 93.1 | 118 |
| Comparative Example 1 | 2.80 | 4.35 | 60.2 | 327 | 1.26 | 1510 | 92.8 | 122 |
| Comparative Example 2 | 2.62 | 4.07 | 60.6 | 313 | 1.24 | 1490 | 93.2 | 106 |
| Comparative Example 3 | 2.52 | 4.00 | 60.6 | 303 | 1.18 | 460 | 93.2 | 112 |
| Comparative Example 4 | 2.56 | 4.10 | 60.5 | 298 | 1.19 | 1200 | 93.4 | 100 |
| Comparative Example 5 | 2.38 | 3.91 | 60.7 | 290 | 1.23 | 1400 | 93.2 | 93 |

Comparative Example 1 showed that the manganese ratio in the dried state was not 60.3% by mass or more unless an electrolysis method in which the manganese ion concentration at the end was lower than the manganese ion concentration at the beginning was used, and the MnO$_2$ content decreased when the manganese ratio was less than 60.3% by mass.

Example 4 and Comparative Example 2 showed that when the period of the electrolyte solution composition satisfying the formulae 1) and 2) did not exceed 6 days, the 240°C structural water content increased, but the total structural water content decreased, and the high-load characteristics also deteriorated.

Comparative Example 4 showed that even with a sufficient total structural water content, a low 240°C structural water content resulted in a decrease in the alkaline potential and the high-load characteristics.

Comparative Examples 3 to 5 showed that the electrolyte solution composition at the end of the electrolysis not satisfying the formula 2) resulted in a decrease in the 240°C structural water content and the high-load characteristics.

Comparative Examples 6 to 11 were excluded from the table because the electrolytic manganese dioxide fell off the anode during the electrolysis and the high-load characteristics could not be determined. When the solution composition at the end of the electrolysis did not satisfy 1), manganese dioxide fell off the anode.

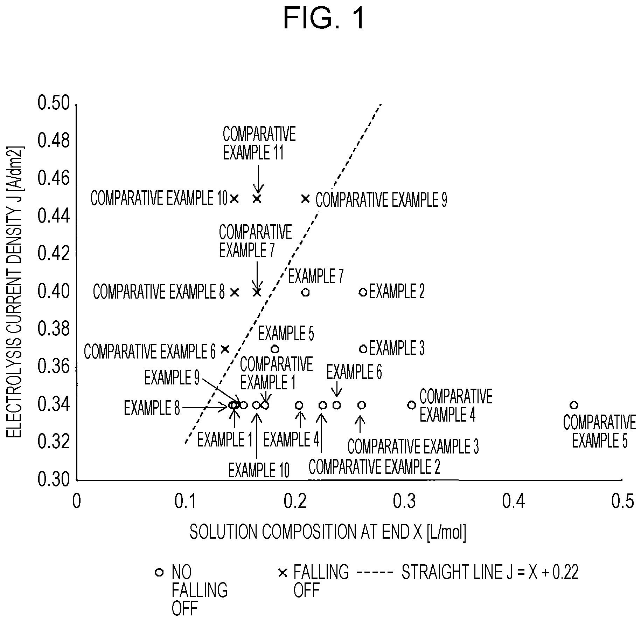

Fig. 1 shows a plot of J versus X for all Examples and Comparative Examples. The formula 1): $J = X + 0.22$ divides falling and non-falling of electrolytic manganese dioxide at the boundary.

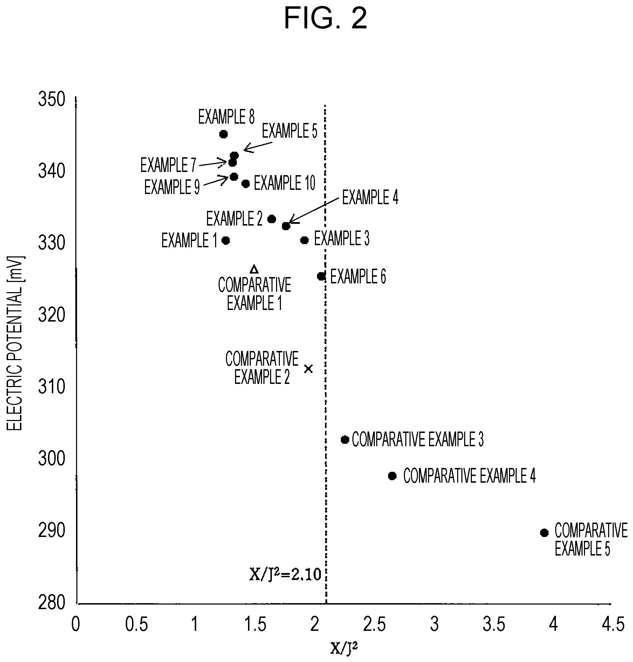

Fig. 2 shows a plot of electric potential versus $X/J^2$ for all Examples and Comparative Examples 1 to 5. The solution composition at the end of the electrolysis not satisfying the formula 2) resulted in a decrease in the electric potential and the high-load characteristics.

While the present disclosure has been described in detail with reference to specific embodiments, it is apparent to a person skilled in the art that various alterations and modifications may be made to the embodiments without departing from the essence and scope of the present disclosure.

The description, claims, drawings and abstract of Japanese Patent Application No. 2022-184032 filed on November 17, 2022 are incorporated herein by reference in its entirety as the disclosure of the description of the present disclosure.

INDUSTRIAL APPLICABILITY

Due to its specific manganese ratio and structural water content, an electrolytic manganese dioxide according to the present invention can be used as a positive-electrode active material for a manganese battery, particularly an alkaline manganese battery, with high electrical discharge performance, particularly good high-load discharge characteristics and high capacity.

**Claims**

1.  An electrolytic manganese dioxide with an alkaline potential of 290 mV or more and less than 350 mV, a manganese content of 60.3% by mass or more and 63.0% by mass or less in a dry state, a structural water content of 2.60% by mass or more as defined by mass loss at 110°C to 240°C and a total structural water content of 4.10% by mass or more.

2.  The electrolytic manganese dioxide according to Claim 1, wherein the alkaline potential is more than 310 mV.

3.  The electrolytic manganese dioxide according to Claim 1 or 2, wherein a sulfate group ($SO_4$) content is 1.5% by mass or less.

4.  The electrolytic manganese dioxide according to any one of Claims 1 to 3,
    wherein a sodium content is 10 ppm by mass or more and 5,000 ppm by mass or less.

5.  A method for producing the electrolytic manganese dioxide according to any one of Claims 1 to 4, wherein a manganese ion concentration [$Mn^{2+}$] is lower at the end of electrolysis than at the beginning of the electrolysis, and a period satisfying both of the following formulae 1) and 2) exceeds 6 days: wherein J denotes an electric current density during the electrolysis (A/dm$^2$), and X denotes a ratio of the manganese ion concentration [$Mn^{2+}$] (mol/L) to a square of a hydrogen ion concentration [$H^+$] (mol/L), that is, $X = [Mn^{2+}]/[H^+]^2$, in an electrolyte solution.

$$J \leq X+0.22 \qquad 1)$$

$$X/J^2 \leq 2.10 \qquad 2)$$

6.  The method for producing the electrolytic manganese dioxide according to Claim 5, wherein the electrolyte solution is a mixed solution of manganese sulfate and sulfuric acid.

7.  The method for producing electrolytic manganese dioxide according to Claim 5 or 6, wherein the manganese ion concentration at the beginning of the electrolysis is 25 g/L or more.

8.  A positive-electrode active material for a battery, comprising the electrolytic manganese dioxide according to any one according to Claims 1 to 4.

# FIG. 1

FIG. 2

## INTERNATIONAL SEARCH REPORT

| International application No. |
| --- |
| **PCT/JP2023/040431** |

**A. CLASSIFICATION OF SUBJECT MATTER**

*C25B 1/21*(2006.01)i; *H01M 4/50*(2010.01)i
FI: C25B1/21; H01M4/50

According to International Patent Classification (IPC) or to both national classification and IPC

**B. FIELDS SEARCHED**

Minimum documentation searched (classification system followed by classification symbols)

C25B1/21,H01M4/50-4/505,C01G45/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); Scopus

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-139960 A (TOSOH CORP) 22 August 2019 (2019-08-22) | 1-8 |
| A | JP 2009-117246 A (TOSOH CORP) 28 May 2009 (2009-05-28) | 1-8 |
| A | JP 2009-289728 A (PANASONIC CORP) 10 December 2009 (2009-12-10) | 1-8 |
| A | JP 47-9171 B1 (MATSUSHITA ELECTRIC INDUSTRIAL CO., LTD.) 17 March 1972 (1972-03-17) | 1-8 |

☐ Further documents are listed in the continuation of Box C.      ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 January 2024** | **13 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/040431**

| Patent document cited in search report | | | Publication date (day/month/year) | Patent family member(s) | | | Publication date (day/month/year) |
|---|---|---|---|---|---|---|---|
| JP | 2019-139960 | A | 22 August 2019 | (Family: none) | | | |
| JP | 2009-117246 | A | 28 May 2009 | US | 2008/0193847 | A1 | |
| | | | | US | 2013/0146475 | A1 | |
| | | | | EP | 1964944 | A1 | |
| | | | | CN | 101307459 | A | |
| | | | | AU | 2008200663 | A | |
| | | | | ES | 2700993 | T | |
| JP | 2009-289728 | A | 10 December 2009 | JP | 4260217 | B1 | |
| | | | | US | 2009/0197169 | A1 | |
| JP | 47-9171 | B1 | 17 March 1972 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6862763 B
- JP 4827501 B
- US 6527941 B
- JP 5428163 B
- JP 2021039930 A
- JP 5136004 B
- JP 2022184032 A

**Non-patent literature cited in the description**

- *Tosoh Research & Technology Review*, vol. 49 (86), 21